# EUROPEAN PATENT APPLICATION

(11) **EP 4 535 199 A1**
(43) Date of publication of application: **09.04.2025**
(21) Application number: 23802904.5
(22) Date of filing: 09.05.2023
(51) Int. Cl.: G06F 16/957

(54) **INFORMATION DISPLAY METHOD AND APPARATUS, ELECTRONIC DEVICE, AND STORAGE MEDIUM**

(30) Priority: 13.05.2022 CN 202210524629
(71) Applicant: BEIJING YOUZHUJU NETWORK TECHNOLOGY CO. LTD., Beijing 101299 (CN)
(72) Inventor: YIN, Xiaolei, Beijing 100028 (CN); FAN, Jiajia, Beijing 100028 (CN); YU, Youjie, Beijing 100028 (CN); SUN, Menghan, Beijing 100028 (CN)
(74) Representative: Dentons UK and Middle East LLP
(86) International application number: PCT/CN2023/092970
(87) International publication number: WO 2023/217135

(57) **Abstract**

The disclosure relates to a method, an apparatus, an electronic device, and a storage medium for displaying information. The method comprises displaying an information stream page which comprises at least one piece of identification image information, wherein the identification image information is determined based on attribute information of an object to be displayed corresponding to the information stream page; and in response to a trigger operation on the identification image information, displaying a livestreaming room display page corresponding to the information stream page and detailed information of the object to be displayed corresponding to the triggered identification image information. By adopting the technical solution provided by the embodiments of the present disclosure, feature information of the object to be displayed corresponding to the information stream page can be transparently transmitted to the information stream page, such that the amount of information transmitted by the information stream page can be increased, and the willingness of users to continue browsing is facilitated.

## Description

The present application claims priority to Chinese Patent Application No. 202210524629.0, filed on May 13, 2022, and entitled "METHOD, APPARATUS, ELECTRONIC DEVICE, AND STORAGE MEDIUM FOR DISPLAYING INFORMATION".

### FIELD

The present disclosure relates to the field of information display, and in particular to a method, an apparatus, an electronic device, and a storage medium for displaying information.

### BACKGROUND

With the development of applications and computer technologies, an increasing number of users browse various information through an application. By displaying preview information to users, an application attracts users to select information of interest to continue browsing.

However, in practice, the amount of information that the preview information can be displayed to users is limited, which is not conducive to improving the willingness of the users to continue browsing.

### SUMMARY

To solve the above technical problem or at least partially solve the above problem, the present disclosure provides a method, an apparatus, an electronic device, and a storage medium for displaying information.

In a first aspect, the present disclosure provides a method for displaying information, comprising:
displaying an information stream page which comprises at least one piece of identification image information, where the identification image information is determined based on attribute information of an object to be displayed corresponding to the information stream page; and
in response to a trigger operation on the identification image information, displaying a livestreaming room display page corresponding to the information stream page and detailed information of the object to be displayed corresponding to the triggered identification image information.

In a second aspect, the present disclosure further provides an apparatus for displaying information, comprising:
a first display module, configured to display an information stream page which comprises at least one piece of identification image information, where the identification image information is determined based on attribute information of an object to be displayed corresponding to the information stream page; and
a second display module, configured to display, in response to a trigger operation on the identification image information, a livestreaming room display page corresponding to the information stream page and detailed information of the object to be displayed corresponding to the triggered identification image information.

According to a third aspect, the present disclosure further provides an electronic device, comprising:
one or more processors;
a storage device storing one or more programs;
the one or more programs, when executed by the one or more processors, cause the one or more processors to implement the method for displaying information as described above.

In a fourth aspect, the present disclosure further provides a computer-readable storage medium having a computer program stored thereon, where the computer program, when executed by a processor, implements the method for displaying information as described above.

Compared with the prior art, the technical solution provided by embodiments of the present disclosure has the following advantages. An information stream page which comprises at least one piece of identification image information is displayed, where the identification image information is determined based on attribute information of an object to be displayed corresponding to the information stream page. In response to a trigger operation on the identification image information, a livestreaming room display page corresponding to the information stream page and detailed information of the object to be displayed corresponding to the triggered identification image information are displayed. By adopting the technical solution provided by the embodiments of the present disclosure, feature information of the object to be displayed corresponding to the information stream page can be transparently transmitted to the information stream page, such that the amount of information transmitted by the information stream page can be increased, and the willingness of users to continue browsing is facilitated.

### BRIEF DESCRIPTION OF DRAWINGS

The drawings herein are incorporated in and constitute a part of this specification, illustrating embodiments consistent with the present disclosure and, together with the description, serve to explain the principles of the present disclosure.

In order to more clearly illustrate the technical solutions in the embodiments of the present disclosure or in the prior art, the drawings used in the description of the embodiments or the prior art will be briefly introduced below, and it is obvious to those skilled in the art that other drawings may be obtained according to these drawings without creative labor.
FIG. 1 is a flowchart of a method for displaying information according to the embodiments of the present disclosure;
FIG. 2 is a flowchart of a further method for displaying information according to the embodiments of the present disclosure;
FIG. 3 is a schematic diagram of a preview stream page of a livestreaming room according to the embodiments of the present disclosure;
FIG. 4 is a schematic diagram of a livestreaming room display page according to the embodiments of the present disclosure;
FIG. 5 is a schematic diagram of a further livestreaming room display page according to the embodiments of the present disclosure;
FIG. 6 is a schematic diagram of a further preview stream page of the livestreaming room according to the embodiments of the present disclosure;
FIG. 7 is a schematic diagram of a further preview stream page of the livestreaming room according to the embodiments of the present disclosure;
FIG. 8 is a schematic structural diagram of an apparatus for displaying information according to the embodiments of the present disclosure; and
FIG. 9 is a schematic structural diagram of an electronic device according to the embodiments of the present disclosure.

### DETAILED DESCRIPTION

In order to be able to more clearly understand the above objects, features, and advantages of the present disclosure, the solutions of the present disclosure will be further described below. It should be noted that, in the case of no conflict, the features in the embodiments and embodiments of the present disclosure may be combined with each other.

Many specific details are set forth in the following description to facilitate a thorough understanding of the present disclosure, but the present disclosure may also be implemented in ways other than those described herein; it is apparent that the embodiments in the specification are only part of the embodiments of the present disclosure, not all embodiments.

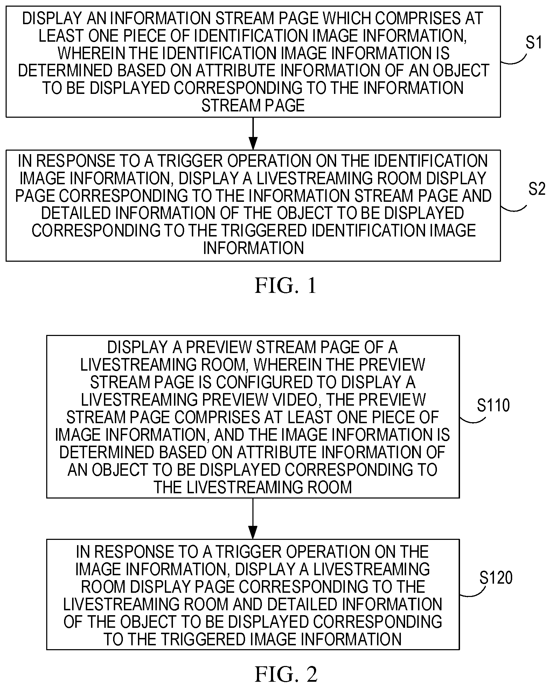

FIG. 1 is a flowchart of a method for displaying information according to the embodiments of the present disclosure. This embodiment may be applied to a case in which information is displayed in a client. The method may be implemented by an apparatus for displaying information, and the apparatus may be implemented in software and/or hardware. The apparatus may be configured in an electronic device, for example, a terminal, including but not limited to a smartphone, a handheld computer, a tablet computer, a wearable device with a display screen, a desktop computer, a laptop computer, an all-in-one machine, a smart home device, and the like. Alternatively, this embodiment may apply to a case in which information is displayed in a server, and the method may be implemented by the apparatus for displaying information. The apparatus may be implemented in software and/or hardware, and the apparatus may be configured in an electronic device, for example, a server.

As shown in FIG. 1, the method may specifically include the following.

S1: An information stream page which comprises at least one piece of identification image information is displayed, where the identification image information is determined based on attribute information of an object to be displayed corresponding to the information stream page.

The information stream page may be a page used to display information stream to users in an application, and in some embodiments, the information stream page may be a preview stream page or a detailed information stream page of different types of information such as a video, a text, and an image. It may be appreciated that the information stream page may be understood as a video page configured to attract traffic. In an implementation, the information stream page may be understood as a video page configured to attract traffic for a livestreaming room, which, for example, may be a video page of a short video (video content of the short video may be different from video content of the livestreaming room), or may be a preview stream page corresponding to the livestreaming room. In this way, users may be attracted to perform a trigger operation on identification image information in the information stream page, which will lead them to a livestreaming room display page corresponding to the information stream page.

In an embodiment, the information stream page is a preview stream page of a livestreaming room, and the preview stream page is configured to display the livestreaming preview video. The livestreaming preview video may be a video segment configured to represent livestreaming content of the livestreaming room.

In a further embodiment, the information stream page is a display page of a short video.

The object to be displayed may be a product or a service.

In response to the information stream page being a preview stream page, the object to be displayed corresponding to the information stream page refers to an object to be displayed promoted by a detailed information stream page corresponding to the preview stream page. For example, in response to the information stream page being a preview stream page of the livestreaming room, the object to be displayed corresponding to the information stream page refers to an object to be displayed promoted by a livestreaming room display page. In this case, the object to be displayed corresponding to the information stream page is an object to be displayed corresponding to the livestreaming room.

In response to the information stream page being a detailed information stream page, the object to be displayed corresponding to the information stream page refers to the object to be displayed promoted by the detailed information stream page. For example, in response to the information stream page being a display page of a short video, the object to be displayed corresponding to the information stream page refers to an object to be displayed promoted by the short video.

The attribute information of the object to be displayed refers to a basis for selecting a target object to be displayed from a plurality of objects to be displayed corresponding to the information stream page.
"the identification image information is determined based on attribute information of an object to be displayed corresponding to the information stream page" refers to that one or more objects to be displayed therein are selected as the target object to be displayed based on the attribute information of the object to be displayed corresponding to the information stream page, and the identification image information is determined based on the target object to be displayed. One piece of identification image information corresponds to one object to be displayed.

The object to be displayed includes a plurality of features. The features of the object to be displayed are characteristics formed by the structure and composition of the object to be displayed. In response to the object to be displayed being an item, the features are shape, size, quality, function, trademark, type, price, color, package, and the like of the object to be displayed. In response to the object to be displayed being a service, the features are content, notice, and the like included in the object to be displayed. The features of the object to be displayed reflect the attraction of the object to be displayed to the user. The features of the object to be displayed are the main stimulus that may affect the cognition, emotion, and behavior of the user. The feature information of the object to be displayed is information describing the features of the object to be displayed. The feature information of the object to be displayed can enable users to know the object to be displayed quickly.

The identification image information is an image for displaying partial feature information of the object to be displayed. In other words, the identification image information displays the partial feature information of the object to be displayed corresponding to the identification image information in the form of an image to attract users to continue browsing.

In an embodiment, in response to a number of pieces of the identification image information being greater than or equal to two, and the identification image information having different arrangement priorities, a display location of the identification image information with a high arrangement priority is located before a display location of the identification image information with a low arrangement priority in the information stream page.

In a further embodiment, the display location of the identification image information is at the bottom of the information stream page; or the display location of the identification image information is in a background area.

S2: In response to a trigger operation on the identification image information, a livestreaming room display page corresponding to the information stream page and detailed information of the object to be displayed corresponding to the triggered identification image information are displayed.

The trigger operation refers to a selection operation, a click operation, or a sliding operation on the identification image information.

The livestreaming room display page specifically refers to a public chat screen of a livestreaming room displayed after entering the livestreaming room that is live streaming.

The object to be displayed includes a plurality of features, such as shape, size, quality, function, trademark, type, price, color, and package of the object to be displayed. The detailed information of the object to be displayed is a set formed by collecting a plurality of pieces of characteristic information of the same object to be displayed together. That is, the detailed information of a certain object to be displayed includes a plurality of different pieces of characteristic information of the object to be displayed.

Here, it should be noted that, from the perspective of the first function of the identification image information, the identification image information is essentially a collection formed by pooling the plurality of pieces of characteristic information of the same object to be displayed together. However, for the same object to be displayed, the amount of information included in the identification image information is less than the amount of information included in the detailed information.

There are multiple implementation methods for this step, which are not limited in the present application. For example, the implementation method for this step includes: in response to a trigger operation on an identification image information, jumping from the information stream page to the livestreaming room display page corresponding to the information stream page, and displaying, in the livestreaming room display page, the detailed information of the object to be displayed corresponding to the triggered identification image information.

Further, the displaying, in the livestreaming room display page, the detailed information of the object to be displayed corresponding to the triggered identification image information comprises: displaying, in the livestreaming room display page, an object display page of a livestreaming room corresponding to the livestreaming room display page, wherein the object display page comprises detailed information of an object to be displayed corresponding to the livestreaming room, and the object to be displayed comprising the object to be displayed corresponding to the triggered identification image information; or displaying, in the livestreaming room display page, a detail page of the object to be displayed corresponding to the triggered identification image information, wherein the detail page comprises detailed information of the object to be displayed corresponding to the triggered identification image information.

**Compared** with the prior art, the technical solution provided by the embodiments of the present disclosure has the following advantages. An information stream page which comprises at least one piece of identification image information is displayed, where the identification image information is determined based on attribute information of an object to be displayed corresponding to the information stream page. In response to a trigger operation on the identification image information, a livestreaming room display page corresponding to the information stream page and detailed information of the object to be displayed corresponding to the triggered identification image information are displayed. By adopting the technical solution provided by the embodiments of the present disclosure, feature information of the object to be displayed corresponding to the information stream page can be transparently transmitted to the information stream page, such that the amount of information transmitted by the information stream page can be increased, and the willingness of users to continue browsing is facilitated.

Further, the information stream page comprises a summary entry area, and the method further comprises: in response to the trigger operation on the summary entry area, jumping to a livestreaming room display page corresponding to the information stream page, where the livestreaming room display page comprises an object display page corresponding to the livestreaming room, and the object display page comprising detailed information of an object to be displayed corresponding to the livestreaming room.

Further, the information stream page comprises an information display area, the identification image information is located within the information display area, and in response to a number of pieces of the identification image information that can be accommodated in the information display area being less than a number of identification image information to be displayed, the method further comprises: in response to the trigger operation on the information display area, switching the identification image information displayed in the information display area.

FIG. 2 is a flowchart of a further method for displaying information according to the embodiments of the present disclosure. The method provided in FIG. 2 is a specific example in FIG. 1. Referring to FIG. 2, the method includes the following.

S110: A preview stream page of a livestreaming room is displayed, where the preview stream page is configured to display a livestreaming preview video, the preview stream page comprises at least one piece of identification image information, and the identification image information is determined based on attribute information of an object to be displayed corresponding to the livestreaming room.

The livestreaming preview video may be a video segment configured to represent the livestreaming content of the livestreaming room, and the livestreaming content may be previewed through the video segment. The livestreaming preview video may be generated based on the livestreaming content of the livestreaming room. For example, the content of the live streaming may be used as the livestreaming preview video, and alternatively, the livestreaming content may be generated by clipping the content of the live streaming. The preview stream page may be a page in an application configured to play the livestreaming preview video.

The object to be displayed is a product shared by a live streamer with the audience in a livestreaming manner in the livestreaming room. The product may be an article or a service. In a livestreaming room, a shopping cart of the livestreaming room includes a plurality of products, and the live streamer shares products in the shopping cart with the audience in the livestreaming manner. All of the products in the shopping cart are the object to be displayed corresponding to the livestreaming room.

The object to be displayed includes a plurality of features. The features of the object to be displayed are characteristics formed by the structure and composition of the object to be displayed. In response to the object to be displayed being an item, the features are shape, size, quality, function, trademark, type, price, color, package, and the like of the object to be displayed. In response to the object to be displayed being a service, the features are content, notice, and the like included in the object to be displayed. The features of the object to be displayed reflect the attraction of the object to be displayed to the consumer. The features of the object to be displayed are the main stimulus that may affect the cognition, emotion, and behavior of the user who is watching the live streaming. The feature information of the object to be displayed is information describing the features of the object to be displayed. The feature information of the object to be displayed can enable users to know the object to be displayed quickly.

The identification image information is an image for displaying partial feature information of the object to be displayed. In other words, the identification image information displays the partial feature information of the object to be displayed corresponding to the identification image information in the form of an image to attract users to enter the livestreaming room. The identification image information has two functions, one is a display function, that is, partial feature information of the object to be displayed corresponding to the display function can be displayed, and the other one is a control function, that is, entering the livestreaming room can be realized by triggering the control function.

For the first function of the identification image information, alternatively, the identification image information may include static image information or dynamic image information. For example, in response to an object to be displayed being a lipstick, the identification image information corresponding to the object to be displayed includes a static picture and the price of the lipstick. For another example, in response to an object to be displayed being a necklace, the identification image information corresponding to the object to be displayed includes a dynamic image showing the multi-angle wearing effect and the price of the necklace.

The second function of the identification image information will be described in detail in S120, and details are not described here again.

One piece of identification image information corresponds to one object to be displayed. The object to be displayed corresponding to the identification image information is defined as the target object to be displayed. In practice, one livestreaming room may correspond to a plurality of objects to be displayed, and only a few of them are determined as the target object to be displayed, and corresponding identification image information is set.

The attribute information of the object to be displayed refers to a basis for selecting the target object to be displayed from all of the objects to be displayed corresponding to a livestreaming room. The attribute information of the object to be displayed includes, but is not limited to, the state of the object to be displayed, display priority information, and popularity information.

The state of the object to be displayed includes a state of being explained and a state of to be explained. In the livestreaming process, the live streamer may explain respective objects to be displayed corresponding to the livestreaming room one by one. The state of the object to be displayed that the live streamer is demonstrating currently is in the state of being explained. In addition to the object to be displayed in the state of being explained, the remaining objects to be displayed are all in the state of to be explained.

The display priority is a basis for determining whether an object to be displayed can serve as a target object to be displayed. The display priority information of the object to be displayed may be pre-specified, or may be determined based on one or more pieces of specific feature information (such as type, price, inventory, and so on) of the object to be displayed, or may be determined based on the interest and demand of the demographic group of users watching the live streaming, which is not limited in this application. In an example, the display priority of the object to be displayed with a "featured" tag is predetermined to be higher than the display priority of the other object to be displayed.

The popularity information of the object to be displayed is information characterizing the popularity of the object to be displayed, and for example, the popularity information of the object to be displayed includes at least one of the following: the number of followers, the number of favorites, the number of purchases, the number of reviews, the number of shares, the number of views, the number of inquiries, and the number of likes of the object to be displayed.

"the identification image information is determined based on attribute information of an object to be displayed corresponding to the livestreaming room" refers to that one or more objects to be displayed of respective objects to be displayed corresponding to the livestreaming room are selected as the target object to be displayed based on the attribute information of the respective objects to be displayed, and the identification image information is determined based on the object to be displayed.

There are various methods for determining the target object to be displayed based on the attribute information of the object to be displayed corresponding to the livestreaming room, which is not limited in this application. For example, at least one group of screening criteria is predetermined, and each group of screening criteria includes at least one screening criterion. Each group of screening criteria is configured for screening out a target object to be displayed.

In response to a group of screening criteria includes a plurality of screening criteria, the relationship between the screening criteria in the same group of screening criteria is a parallel relationship, that is, in response to the attribute information of the object to be displayed meets respective screening criteria in the group of screening criteria, it is determined that the object to be displayed meets the group of screening criteria. That is, the object to be displayed is the target object to be displayed screened through the group of screening criteria.

Alternatively, one piece of identification image information corresponds to one object to be displayed, and the object to be displayed corresponding to the identification image information comprises at least one of the following: an object to be displayed in a state of being explained, an object to be displayed whose display priority meets a predetermined display condition, and an object to be displayed whose popularity value meets a predetermined popularity condition. The predetermined popularity condition may be that the popularity value is greater than or equal to a first predetermined value within a predetermined time period, or the popularity value is the largest within the predetermined time period.

In an example, three groups of screening criteria are set, and the screening criteria included in the first group of screening criteria is: in the state of being explained; the screening criteria included in the second group of screening criteria is that the display priority is the highest; and the screening criteria included in the third group of screening criteria is that the sales volume from the starting moment of the current live streaming to the current moment is the highest. The object to be displayed in the state of being explained can be screened out through the first group of screening criteria. The object to be displayed with the highest display priority can be screened out through the second group of screening criteria. The object to be displayed with the highest sales volume from the starting moment of the current live streaming to the current moment can be screened out through the third group of screening criteria.

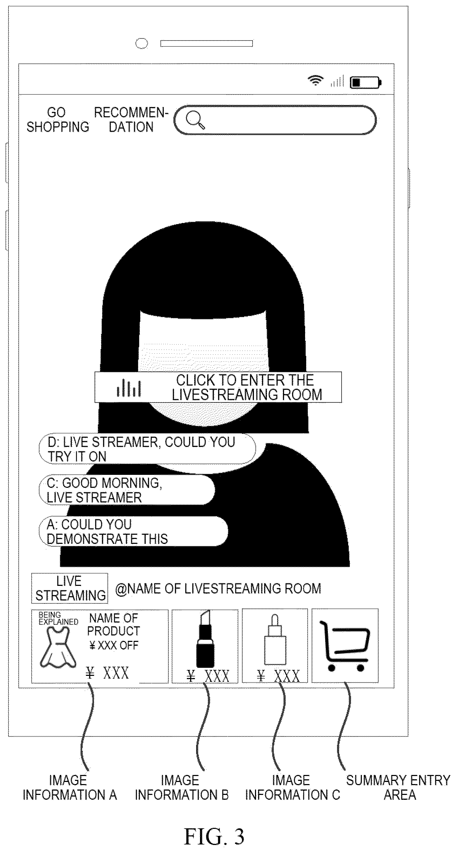

FIG. 3 is a schematic diagram of a preview stream page of a livestreaming room according to the embodiments of the present disclosure. Referring to FIG. 3, the preview stream page includes three pieces of identification image information, namely, identification image information A, identification image information B, and identification image information C. The object to be displayed corresponding to the identification image information A is the object to be displayed in the state of being explained. The object to be displayed corresponding to the identification image information B is the object to be displayed with the highest display priority. The object to be displayed corresponding to the identification image information C is the object to be displayed with the highest sales volume from the start moment of the current live streaming to the current moment.

Alternatively, with continued reference to FIG. 3, the identification image information A corresponding to the object to be displayed in the state of being explained is marked with "being explaining". The identification image information B corresponding to the object to be displayed which is promoted mainly by the live streamer is marked with "featured". The identification image information C corresponding to the object to be displayed with the highest sales volume from the start moment of the current live streaming to the current moment is marked with "hot-selling".

Further, the object to be displayed corresponding to the identification image information may further be set to include at least one of the following: an object to be displayed in the state of being explained and having inventory, an object to be displayed with the display priority satisfying a predetermined display condition and having inventory, and an object to be displayed whose popularity value satisfies a predetermined popularity condition.

Further, to further improve the amount of information displayed on the preview stream page, it is set that if the preview stream page includes at least two pieces of identification image information, the object to be displayed corresponding to any two pieces of identification image information in the at least two pieces of identification image information are different.

S120: In response to a trigger operation on the identification image information, a livestreaming room display page corresponding to the livestreaming room and detailed information of the object to be displayed corresponding to the triggered identification image information are displayed.

The trigger operation refers to a selection operation, a click operation, or a sliding operation on the identification image information.

The livestreaming room display page specifically refers to a public chat screen of a livestreaming room displayed after entering the livestreaming room.

As described above, the object to be displayed includes a plurality of features, such as shape, size, quality, function, trademark, type, price, color, and package of the object to be displayed. The detailed information of the object to be displayed is a set formed by collecting a plurality of pieces of characteristic information of the same object to be displayed together. That is, the detailed information of a certain object to be displayed includes a plurality of different pieces of characteristic information of the object to be displayed.

Here, it should be noted that, from the perspective of the first function of the identification image information, the identification image information is essentially a collection formed by pooling the plurality of pieces of characteristic information of the same object to be displayed together. However, for the same object to be displayed, the amount of information included in the identification image information is less than the amount of information included in the detailed information.

There are multiple specific implementation methods for this step, and for example, in response to the trigger operation on the identification image information, the preview stream page is jumped to the livestreaming room display page corresponding to the livestreaming room, and the detailed information of the object to be displayed corresponding to the triggered identification image information is displayed in the livestreaming room display page. "The preview stream page is jumped to the livestreaming room display page corresponding to the livestreaming room" means that in response to any piece of identification image information is triggered, the terminal only displays the livestreaming room display page corresponding to the livestreaming room, and no longer displays the preview stream page. "The detailed information of the object to be displayed corresponding to the triggered identification image information is displayed in the livestreaming room display page" means that the detailed information of the object to be displayed corresponding to the triggered identification image information may block part of the picture of the livestreaming video played by the livestreaming room display page.

In an embodiment, the displaying, in the livestreaming room display page, the detailed information of the object to be displayed corresponding to the triggered identification image information comprises: displaying, in the livestreaming room display page, an object display page corresponding to the livestreaming room, where the object display page comprises detailed information of an object to be displayed corresponding to the livestreaming room, and the object to be displayed comprises the object to be displayed corresponding to the triggered identification image information.

The object display page is a page summarizing and displaying detailed information of all of the object to be displayed corresponding to the livestreaming room. Alternatively, the object display page may be an object display list. Alternatively, in the object display page, detailed information of respective objects to be displayed may be displayed in a form of cards. The feature information of the object to be displayed is summarized to be displayed in one card, and the feature information displayed by different cards belongs to different objects to be displayed. Since the amount of information that can be displayed by the identification image information is limited, such setting can satisfy the demand of users for further understand the detailed information of the object to be displayed corresponding to the identification image information.

It should be emphasized that, if the object to be displayed corresponding to the livestreaming room includes other object to be displayed in addition to the object to be displayed corresponding to the triggered identification image information, the object display page further includes other object to be displayed other than the object to be displayed corresponding to the triggered identification image information.

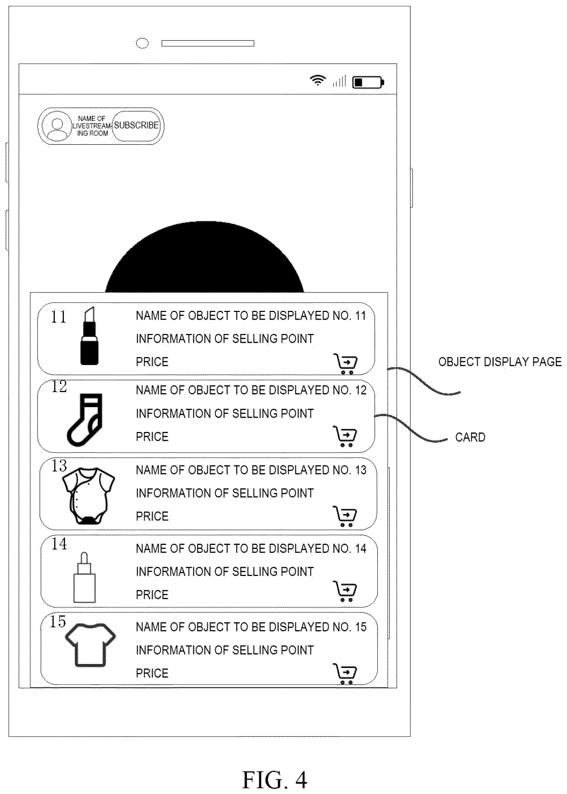

FIG. 4 is a schematic diagram of a livestreaming room display page according to the embodiments of the present disclosure. Referring to FIG. 4, the livestreaming room display page includes an object display page corresponding to the livestreaming room, and the object display page is an object display list. The object display page includes detailed information of a plurality of objects to be displayed corresponding to the livestreaming room, and detailed information of respective objects to be displayed is displayed in a form of cards.

Assuming that a user triggers identification image information B in FIG. 3, the object to be displayed corresponding to the identification image information B is a lipstick, referring to FIG. 4, the object display page includes detailed information of the lipstick. In addition, the object display page further includes detailed information of other objects (such as socks, baby clothing, and so on) besides the lipstick.

It should be emphasized that in response to the livestreaming room corresponding to a plurality of objects to be displayed, detailed information of all objects to be displayed cannot be displayed together in the object display page, and in response to a trigger operation on the identification image information, detailed information corresponding to the triggered identification image information is anchored in the first screen of the object display page. The "first screen" refers to a directly displayed page of the object display page, and the user may find the page of the detailed information of the object to be displayed corresponding to the triggered identification image information without performing a page-turning or sliding operation on the object display page.

Further, in response to the object display page being an object display list, a display location of the detailed information of the object to be displayed corresponding to the triggered identification image information is a first display location in the object display list; and/or a display mode of at least part of information in the detailed information of the object to be displayed corresponding to the triggered identification image information is highlighted. For example, if identification image information corresponding to the lipstick numbered 11 is triggered, referring to FIG. 4, the detailed information of the lipstick numbered 11 is located at the first display location in the object display list. For another example, the number in the detailed information of the object to be displayed corresponding to the triggered identification image information is displayed in a highlighted state. The purpose of this arrangement is to cause the detailed information of the object to be displayed to be highlighted, so that the user can quickly positioning the detailed information of the object to be displayed corresponding to the triggered identification image information in the detailed information of the plurality of objects to be displayed.

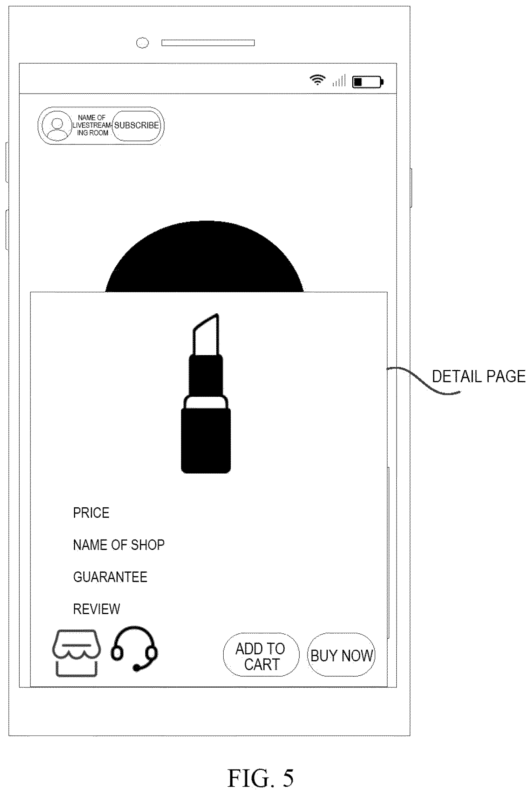

In another embodiment, the displaying, in the livestreaming room display page, the detailed information of the object to be displayed corresponding to the triggered identification image information comprises: displaying, in the livestreaming room display page, a detail page of the object to be displayed corresponding to the triggered identification image information, wherein the detail page comprises detailed information of the object to be displayed corresponding to the triggered identification image information. The detail page of the object to be displayed corresponding to the triggered identification image information is only used for displaying detailed information of the object to be displayed corresponding to the triggered identification image information, and does not include detailed information of other objects to be displayed. FIG. 5 is a schematic diagram of a further display page of a livestreaming room according to the embodiments of the present disclosure. Assuming that a user triggers identification image information B in FIG. 3, the object to be displayed corresponding to the identification image information B is a lipstick, referring to FIG. 5, a detail page of the lipstick is displayed in the livestreaming room display page, and information (such as price, name of store, guarantee, and review) in the detail page of the lipstick is configured to describe characteristics of the lipstick.

According to the technical solution provided by the embodiments of the present disclosure, the preview stream page of the livestreaming room is displayed, the preview stream page is configured to display the livestreaming preview video, the preview stream page comprises at least one piece of identification image information, and the identification image information is determined based on the attribute information of the object to be displayed corresponding to the livestreaming room; and in response to the trigger operation on the identification image information, the livestreaming room display page corresponding to the livestreaming room and the detailed information of the object to be displayed corresponding to the triggered identification image information are displayed. By adopting the technical solution provided by the embodiments of the present disclosure, the feature information of the object to be displayed corresponding to the livestreaming room can be transparently transmitted to the preview stream page, such that the amount of information transmitted by the livestreaming preview stream page can be increased, and the willingness of users to continue watching the live streaming of the livestreaming room is facilitated.

Based on the foregoing technical solutions, alternatively, in response to the attribute information of the at least one object to be displayed corresponding to the livestreaming room satisfying a predetermined update condition, the identification image information is updated.

Here, the object to be displayed may be an object to be displayed corresponding to the identification image information, or may be an object to be displayed that does not correspond to the identification image information. In other words, in response to the attribute information of any object to be displayed corresponding to the livestreaming room satisfying the predetermined update condition, an update of the identification image information may be triggered.

In practice, there are a plurality of contents of the update condition, and for example, the update condition comprises at least one of the following: the state of the object to be displayed changing from the state of being explained to the state of to be explained, the object to be displayed with the highest popularity value being replaced, and the object to be displayed with the highest display priority being replaced. The object to be displayed with the highest popularity value being replaced refers to that the object to be displayed with the highest popularity value is the object to be displayed *a*, but over time, the object to be displayed with the highest popularity value changes to object to be displayed b, and the object to be displayed *a* and the object to be displayed b correspond to the same livestreaming room. Similarly, the object to be displayed with the highest display priority being replaced refers to that the object to be displayed with the highest display priority is the object to be displayed c. At a certain moment, the object to be displayed with the highest priority changes to the object to be displayed *d,* and the object to be displayed c and the object to be displayed *d* correspond to the same livestreaming room.

"Updating the identification image information" comprises updating a part of the identification image information that is currently displayed, or updating all of the identification image information that is currently displayed. Here, "updating the identification image information" means that the target object to be displayed is redetermined from the objects to be displayed corresponding to the livestreaming room, and the identification image information for reflecting the feature information of the object to be displayed is generated. In this way, it can be ensured that the identification image information displayed on the preview stream page of the livestreaming room has high timeliness.

In an embodiment, a state of the object to be displayed comprises a state of being explained and a state of to be explained; and in response to an object to be displayed corresponding to the identification image information displayed in the preview stream page being in the state of being explained, in response to the state of the object to be displayed changing from the state of being explained to the state of to be explained, updating all of the identification image information.

For example, referring to FIG. 3, the object to be displayed corresponding to the identification image information A is a skirt, and the skirt is in the state of being explained. In response to the state of the skirt being changed from the state of being explained to the state of to be explained, all of the identification image information is updated, that is, the identification image information A, the identification image information B, and the identification image information C are updated.

As described above, in response to a plurality of groups of screening criteria are predetermined for screening a plurality of target objects to be displayed to form the identification image information corresponding to respective target objects to be displayed, where each group of screening criteria is configured to screen out a target object to be displayed, and in response to the target object to be displayed obtained based on any group of screening criteria being replaced, only identification image information corresponding to the target object to be displayed is updated.

For example, it is assumed that a screening criterion included in the third group of screening criteria is that the sales volume from the starting moment of the current livestreaming to the current moment is the highest. At moment tl, the object to be displayed satisfying the third group of screening criteria is skincare toner, so that the identification image information corresponding to the skincare toner (that is, the identification image information C in FIG. 3) is displayed in the preview stream page. If the object to be displayed satisfying the third group of screening criteria changes to an eyeshadow palette at moment t2 (the moment t2 is a moment after the moment t1), only the identification image information C is updated, so that the identification image information C corresponds to the eyeshadow palette, and the identification image information A and the identification image information B are not updated.

In a further embodiment, response to a number of pieces of the identification image information being greater than or equal to two, and the identification image information having different arrangement priorities, a display location of the identification image information with a high arrangement priority is located before a display location of the identification image information with a low arrangement priority in the preview stream page.

The arrangement priority is a basis for determining the arrangement order of the plurality of piece of identification image information in the preview stream page. Alternatively, when the identification image information is determined, a plurality of groups of screening criteria are determined, where each group of screening criteria is configured to screen out a target object to be displayed, and a corresponding relationship between respective groups of screening criteria and arrangement priority is set to have a fixed correspondence. In response to a target object to be displayed being obtained by screening a certain group of screening criteria, the identification image information of the target object to be displayed has a display priority corresponding to the group of screening criteria.

In an example, three groups of screening criteria are set: a screening criterion included in the first group of screening criteria is: being in the state of being explained and having stock; a screening criterion included in the second group of screening criteria is: the display priority is the highest and having stock; and a screening criterion included in the third group of screening criteria is that the popularity value is the highest and having inventory. It is predetermined that a display priority of the identification image information of the target object to be displayed obtained based on the first group of screening criteria is the highest, a display priority of the identification image information of the target object to be displayed obtained based on the second group of screening criteria is the second highest, and a display priority of the identification image information of the target object to be displayed obtained based on the third group of screening criteria is the third highest. It is assumed that the object to be displayed satisfying the first group of screening criteria is the first target object to be displayed, and the identification image information corresponding to the first target object to be displayed is the first identification image information. The object to be displayed satisfying the second group of screening criteria is the second target object to be displayed, and the identification image information corresponding to the second target object to be displayed is the second identification image information. The object to be displayed satisfying the third group of screening criteria is the third target object to be displayed, and the identification image information corresponding to the third target object to be displayed is the third identification image information. The result of sorting respective pieces of identification image information in descending order based on the display priority is the first identification image information, the second identification image information, and the third identification image information.

In the preview stream page, the higher the identification display priority, the more front the display location of the identification image information.

In another embodiment, the display location of the identification image information is located at the bottom of the preview stream page. For example, in FIG. 3, display locations of the identification image information A, the identification image information B, and the identification image information C are located at the bottom of the preview stream page. Alternatively, the display location of the identification image information is located in a background area. The background area refers to an area in a preview stream video frame except the area occupied by the live streamer. The purpose of this arrangement is to reduce the probability of the identification image information blocking important information in the preview stream video.

Based on the foregoing technical solutions, alternatively, the preview stream page of the livestreaming room comprises a summary entry area; in response to the trigger operation on the summary entry area, a livestreaming room display page is jumped to; the livestreaming room display page comprises an object display page corresponding to the livestreaming room, and the object display page comprises detailed information of an object to be displayed corresponding to the livestreaming room. Here, "a livestreaming room display page is jumped to" means that the only the livestreaming room display page corresponding to the livestreaming room is displayed in the terminal, and the preview stream page is no longer displayed. In this way, users can quickly browse all objects to be displayed corresponding to the livestreaming room. For example, with continued reference to FIG. 3, the summary entry area may be an area occupied by a shopping cart icon in the preview stream page, or an area occupied by descriptive information such as "more".

Based on the above technical solutions, the information stream page comprises an information display area, the identification image information is located within the information display area, and in response to a number of pieces of the identification image information that can be accommodated in the information display area being less than a number of identification image information to be displayed, the method further comprises: in response to the trigger operation on the information display area, switching the identification image information displayed in the information display area. The information display area refers to an area for summarizing and displaying the identification image information.

The trigger operation on the information display area includes a selection operation, a clicking operation, a sliding operation, and the like on the local area in the information display area, or includes a selection operation, a clicking operation, or a sliding operation on the entire information display area. In this way, users can switch the image area in the preview stream page.

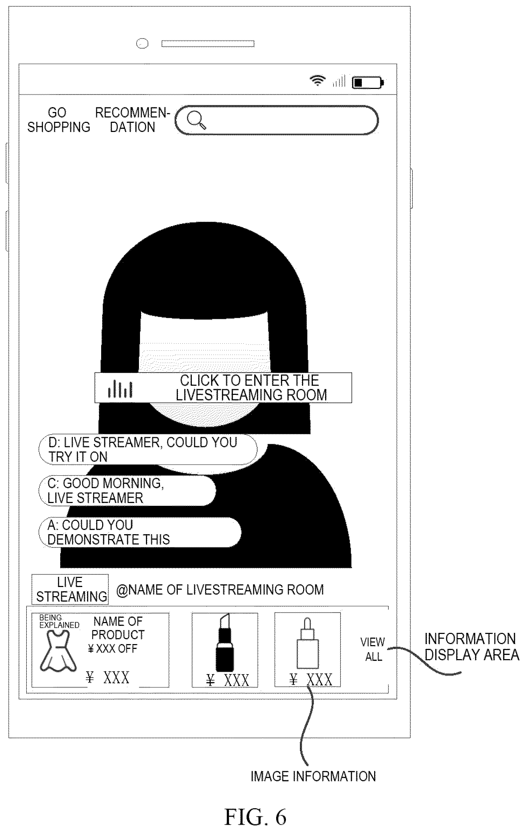

In an embodiment, "switching the identification image information displayed in the information display area" comprises: switching all pieces of the identification image information currently displayed in the information display area. For example, FIG. 6 is a schematic diagram of a further preview stream page of a livestreaming room according to the embodiments of the present disclosure. Referring to FIG. 6, it is assumed that the number of pieces of the identification image information that can be accommodated in an information display area is 3, and 6 pieces of identification image information are determined based on the attribute information of the object to be displayed corresponding to the livestreaming room, and the 3 pieces of identification image information may be displayed at one time in the information display area. In response to a certain moment, the first to the third piece of identification image information are displayed in the information display area. After the user clicks "view all" in the information display area, the identification image information displayed in the information display area is switched, so that the fourth to the sixth pieces of identification image information are displayed in the information display area, and the first to the third pieces of identification image information are no longer displayed.

In another embodiment, "switching the identification image information displayed in the information display area" comprises: switching part of the identification image information currently displayed in the information display area.

Alternatively, in response to the trigger operation on the information display area being a sliding operation on the information display area, the sliding information of the sliding operation is obtained, where the sliding information comprises one or more of the following: a sliding distance, a starting location of the sliding operation, an ending location of the sliding operation, and a sliding direction; based on the sliding information, the target identification image information is determined in the identification image information currently displayed in the information display area; and the target identification image information is switched, such that the information display area after switching does not include the target identification image information.

Further, different sliding distances corresponding to different numbers of pieces of identification image information to be switched may be predetermined, and in response to the sliding information comprising a sliding direction and a sliding distance, determining target identification image information in the identification image information currently displayed in the information display area based on the sliding information comprises: determining a number of identification image information to be switched at this time based on the sliding distance; determining a counting direction based on the sliding direction; and determining the target identification image information in the identification image information currently displayed in the information display area based on the number of pieces of the identification image information to be switched at this time and the counting direction.

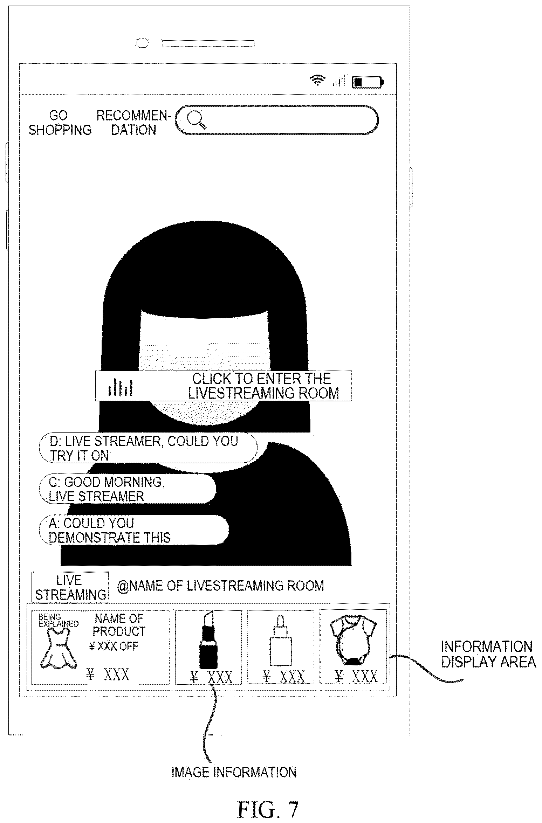

FIG. 7 is a schematic diagram of a further preview stream page of a livestreaming room according to the embodiments of the present disclosure. Referring to FIG. 7, it is assumed that the number of pieces of the identification image information that can be accommodated in the information display area is 3, and 8 pieces of identification image information are determined based on the attribute information of the object to be displayed corresponding to the livestreaming room, and 3 pieces of identification image information may be displayed at one time in the information display area. In response to a certain moment, the second to the fourth pieces of identification image information are displayed in the information display area. When a user performs a leftward sliding operation on the information display area, the determined counting direction is a left-to-right direction, and it is determined, based on the sliding distance of the sliding operation, that two pieces of identification image information need to be switched. Therefore, the second piece and the third piece of identification image information are used as target identification image information, and the second piece to the third piece of identification image information displayed in the information display area are switched, such that the fourth piece, the fifth piece, and the sixth piece of identification image information are displayed in the information display area after switching, and the second piece to the third piece of identification image information are no longer displayed.

**It** should be noted that, for the foregoing method embodiments, for simplicity of description, they are all described as a series of combinations of actions, but those skilled in the art should understand that the present invention is not limited by the described order of actions, as certain steps may be performed in other orders or simultaneously in accordance with the present invention. Secondly, those skilled in the art should also understand that the embodiments described in the specification are all preferred embodiments, and the actions and modules involved are not necessarily required by the present invention.

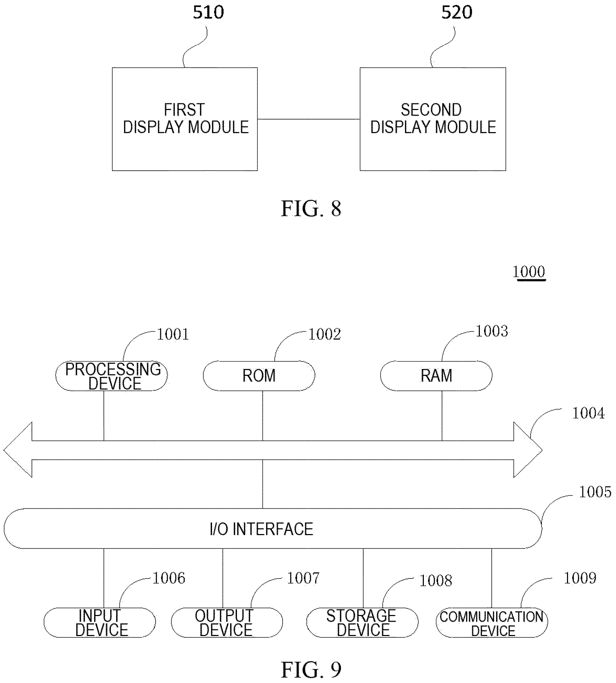

FIG. 8 is a schematic structural diagram of an apparatus for displaying information according to the embodiments of the present disclosure. The apparatus for displaying information provided in the embodiments of the present disclosure may be configured in a client, or may be configured in a server. Referring to FIG. 8, the apparatus for displaying information specifically comprises:
a first display module 510 configured to display an information stream page which comprises at least one piece of identification image information, wherein the identification image information is determined based on attribute information of an object to be displayed corresponding to the information stream page; and
a second display module 520 configured to display, in response to a trigger operation on the identification image information, a livestreaming room display page corresponding to the information stream page and detailed information of the object to be displayed corresponding to the triggered identification image information.

Further, the information stream page is a preview stream page of a livestreaming room, the preview stream page is configured to display a livestreaming preview video, and the object to be displayed corresponding to the information stream page is an object to be displayed corresponding to the livestreaming room.

The second display module 520 is configured to, in response to a trigger operation on the identification image information, display a livestreaming room display page corresponding to a livestreaming room and detailed information of the object to be displayed corresponding to the triggered identification image information.

Further, one piece of identification image information corresponds to an object to be displayed, and
the object to be displayed corresponding to the identification image information comprises at least one of the following:
an object to be displayed in a state of being explained, an object to be displayed whose display priority meets a predetermined display condition, and an object to be displayed whose popularity value meets a predetermined popularity condition.

Further, the method further comprises an update module configured to, in response to attribute information of at least one object to be displayed corresponding to the livestreaming room satisfying a predetermined update condition, update the identification image information.

Further, a state of the object to be displayed comprises a state of being explained and a state of to be explained; and in response to an object to be displayed corresponding to the identification image information displayed in the preview stream page being in the state of being explained, the update module is configured to, in response to the state of the object to be displayed changing from the state of being explained to the state of to be explained, update all of the identification image information.

Further, in response to a number of pieces of the identification image information being greater than or equal to two, and the identification image information having different arrangement priorities, a display location of the identification image information with a high arrangement priority is located before a display location of the identification image information with a low arrangement priority in the information stream page.

Further, the display location of the identification image information is at a bottom of the information stream page; or the display location of the identification image information is in a background area.

Further, the second display module is configured to, in response to the trigger operation on the identification image information, jump from the information stream page to the livestreaming room display page corresponding to the information stream page, and display, in the livestreaming room display page, the detailed information of the object to be displayed corresponding to the triggered identification image information.

Further, the second display module is configured to display, in the livestreaming room display page, an object display page of a livestreaming room corresponding to the livestreaming room display page, where the object display page comprises detailed information of an object to be displayed corresponding to the livestreaming room, and the object to be displayed comprises the object to be displayed corresponding to the triggered identification image information; or display, in the livestreaming room display page, a detail page of the object to be displayed corresponding to the triggered identification image information, where the detail page comprises detailed information of the object to be displayed corresponding to the triggered identification image information.

Further, in response to the object display page being an object display list, a display location of the detailed information of the object to be displayed corresponding to the triggered identification image information is a first display location in the object display list; and/or a display mode of at least part of information in the detailed information of the object to be displayed corresponding to the triggered identification image information is highlighted.

Further, the information stream page of the livestreaming room comprises a summary entry area.

The apparatus further comprises a third display module configured to, in response to the trigger operation on the summary entry area, jump to a livestreaming room display page corresponding to the information stream page, where the livestreaming room display page comprises an object display page corresponding to the livestreaming room, and the object display page comprising detailed information of an object to be displayed corresponding to the livestreaming room.

Further, the information stream page comprises an information display area, the identification image information is located within the information display area, and in response to a number of pieces of the identification image information that can be accommodated in the information display area being less than a number of identification image information to be displayed, the first display module is further configured to, in response to the trigger operation on the information display area, switch the identification image information displayed in the information display area.

The apparatus for displaying information provided by the embodiments of the present disclosure may perform the steps performed by the client or the server in the method for displaying information provided by the method embodiments of the present disclosure, and the implementation steps and beneficial effects are not described here again.

FIG. 9 is a schematic structural diagram of an electronic device according to the embodiments of the present disclosure. FIG. 9 is a schematic structural diagram of an electronic device 1000 suitable for implementing the embodiments of the present disclosure. The electronic device 1000 in the embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), a wearable electronic device, and the like, and a fixed terminal such as a digital TV, a desktop computer, a smart home device, or the like. The electronic device shown in FIG. 9 is merely an example, and should not impose any limitation on the functions and scope of use of the embodiments of the present disclosure.

As shown in FIG. 9, the electronic device 1000 may include a processing device (for example, a central processing unit, a graphics processor, etc. ) 1001, which may execute various appropriate actions and processing according to a program stored in a read-only memory (ROM) 1002 or a program loaded into a random access memory (RAM) 1003 from a storage device 1008 to implement the method for displaying information according to the embodiments of the present disclosure. In the RAM 1003, various programs and information required by the operation of the electronic device 1000 are also stored. The processing device 1001, the ROM 1002, and the RAM 1003 are connected to each other through a bus 1004. Input/output (I/O) interface 1005 is also connected to the bus 1004.

Generally, the following devices may be connected to the I/O interface 1005: an input device 1006 including, for example, a touch screen, a touchpad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to communicate wirelessly or wired with other devices to exchange information. While FIG. 9 shows an electronic device 1000 having various devices, it should be understood that it is not required to implement or have all illustrated devices. More or fewer devices may alternatively be implemented or provided.

**In** particular, according to the embodiments of the present disclosure, the process described above with reference to the flowchart may be implemented as a computer software program. For example, the embodiments of the present disclosure include a computer program product comprising a computer program carried on a non-transitory computer readable medium, and the computer program comprises program code for performing the method shown in the flowcharts to implement the method for displaying information as described above. In such embodiments, the computer program may be downloaded and installed from the network through the communication device 1009, or installed from the storage device 1008, or from the ROM 1002. When the computer program is executed by the processing apparatus 1001, the foregoing functions defined in the method of the embodiments of the present disclosure are performed.

**It** should be noted that the computer-readable medium described above may be a computer-readable signal medium, a computer-readable storage medium, or a combination of thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer-readable signal medium may include an information signal propagated in a baseband or as part of a carrier, where the computer-readable program code is carried. Such propagated information signals may take a variety of forms including, but not limited to, electromagnetic signals, optical signals, or any suitable combination of the foregoing. The computer-readable signal medium may also be any computer-readable medium other than a computer-readable storage medium that may send, propagate, or transmit a program for use by or in connection with an instruction execution system, apparatus, or device. The program code embodied on the computer-readable medium may be transmitted with any suitable medium, including, but not limited to: wires, optical cables, radio frequency (RF), and the like, or any suitable combination of the foregoing.

**In** some implementations, a client, a server may communicate using any known or future-developed network protocol, such as HyperText Transfer Protocol (HTTP), and may be interconnected with any form or medium of digital information communication (e.g., communication network). Examples of communication networks include local area networks ("LANs"), wide area networks ("WANs"), the Internet (e.g., the Internet), and peer-to-peer networks (e.g., ad hoc peer-to-peer networks), as well as any known or future-developed networks.

The computer-readable medium described above may be included in an electronic device, or may be separately present without being assembled into the electronic device.

The computer-readable medium carries one or more programs, and when the one or more programs are executed by the electronic device, the electronic device is caused to:
display an information stream page which comprises at least one piece of identification image information, where the identification image information is determined based on attribute information of an object to be displayed corresponding to the information stream page; and
in response to a trigger operation on the identification image information, display a livestreaming room display page corresponding to the information stream page and detailed information of the object to be displayed corresponding to the triggered identification image information.

Alternatively, when the one or more programs are executed by the electronic device, the electronic device may further perform other steps described in the foregoing embodiments.

Computer program code for performing the operations of the present disclosure may be written in one or more programming languages, including, but not limited to, object-oriented programming languages such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The modules involved in the embodiments of the present disclosure may be implemented in software, or may be implemented in hardware. The name of the module does not constitute a limitation on the unit itself in some cases.

The functions described above may be performed, at least in part, by one or more hardware logic components. For example, without limitation, example types of hardware logic components that may be used include: field programmable gate arrays (FPGA), application-specific integrated circuits (ASIC), application-specific standard products (ASSP), system-on-a-chip (SOC), complex programmable logic devices (CPLD), and the like.

**In** the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage medium may include electrical connections based on one or more lines, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the foregoing.

According to one or more embodiments of the present disclosure, the present disclosure provides an electronic device, comprising:
one or more processors;
a storage storing one or more programs;
the one or more programs, when executed by the one or more processors, cause the one or more processors to implement any method for displaying information according to the present disclosure.

According to one or more embodiments of the present disclosure, the present disclosure provides a computer-readable storage medium having a computer program stored thereon, where the computer program, when executed by a processor, implements any method for displaying information according to the present disclosure.

An embodiment of the present disclosure further provides a computer program product, where the computer program product comprises a computer program or an instruction which, when executed by a processor, implements any method for displaying information according to the present disclosure.

**It** should be noted that, in this specification, relational terms such as "first" and "second" are merely used to distinguish one entity or operation from another entity or operation, and do not necessarily require or imply that any such actual relationship or sequence exists between these entities or operations. Moreover, the terms "comprising," "including," or any other variation thereof are intended to cover a non-exclusive inclusion, such that a process, method, article, or apparatus comprising a series of elements includes not only those elements, but also other elements not expressly listed, or elements inherent to such a process, method, article, or apparatus. Without further restriction, the elements defined by the statement "include one" do not preclude the presence of additional identical elements in the process, method, article, or device that includes the elements.

The above descriptions are only specific embodiments of the present disclosure, so that those skilled in the art can understand or implement the present disclosure. Various modifications to these embodiments will be apparent to those skilled in the art, the general principles definition herein may be implemented in other embodiments without departing from the spirit or scope of the present disclosure. Accordingly, the present disclosure will not be limited to these embodiments described herein, but is to be accorded the widest scope consistent with the principles and novel features disclosed herein.

## Claims

1. A method for displaying information, comprising:
displaying an information stream page which comprises at least one piece of identification image information, wherein the identification image information is determined based on attribute information of an object to be displayed corresponding to the information stream page; and
in response to a trigger operation on the identification image information, displaying a livestreaming room display page corresponding to the information stream page and detailed information of the object to be displayed corresponding to the triggered identification image information.

2. The method of claim 1, wherein the information stream page is a preview stream page of a livestreaming room, the preview stream page is configured to display a livestreaming preview video, and the object to be displayed corresponding to the information stream page is an object to be displayed corresponding to the livestreaming room.

3. The method of claim 2, wherein one piece of identification image information corresponds to an object to be displayed, and
the object to be displayed corresponding to the identification image information comprises at least one of the following:
an object to be displayed in a state of being explained, an object to be displayed whose display priority meets a predetermined display condition, and an object to be displayed whose popularity value meets a predetermined popularity condition.

4. The method of claim 3, further comprising:
in response to attribute information of at least one object to be displayed corresponding to the livestreaming room satisfying a predetermined update condition, updating the identification image information.

5. The method of claim 4, wherein a state of the object to be displayed comprises a state of being explained and a state of to be explained; and in response to an object to be displayed corresponding to the identification image information displayed in the preview stream page being in the state of being explained,
the in response to attribute information of at least one object to be displayed corresponding to the livestreaming room satisfying a predetermined update condition, updating the identification image information comprises:
in response to the state of the object to be displayed changing from the state of being explained to the state of to be explained, updating all of the identification image information.

6. The method of any of claims 1 to 5, wherein in response to a number of pieces of the identification image information being greater than or equal to two, and the identification image information having different arrangement priorities, a display location of the identification image information with a high arrangement priority is located before a display location of the identification image information with a low arrangement priority in the information stream page.

7. The method of any of claims 1 to 5, wherein,
the display location of the identification image information is at a bottom of the information stream page; or
the display location of the identification image information is in a background area.

8. The method of any of claims 1 to 5, wherein the in response to a trigger operation on the identification image information, displaying a livestreaming room display page corresponding to the information stream page and detailed information of the object to be displayed corresponding to the triggered identification image information comprises:
in response to the trigger operation on the identification image information, jumping from the information stream page to the livestreaming room display page corresponding to the information stream page, and displaying, in the livestreaming room display page, the detailed information of the object to be displayed corresponding to the triggered identification image information.

9. The method of claim 8, wherein the displaying, in the livestreaming room display page, the detailed information of the object to be displayed corresponding to the triggered identification image information comprises:
displaying, in the livestreaming room display page, an object display page of a livestreaming room corresponding to the livestreaming room display page, wherein the object display page comprises detailed information of an object to be displayed corresponding to the livestreaming room, and the object to be displayed comprises the object to be displayed corresponding to the triggered identification image information; or
displaying, in the livestreaming room display page, a detail page of the object to be displayed corresponding to the triggered identification image information, wherein the detail page comprises detailed information of the object to be displayed corresponding to the triggered identification image information.

10. The method of claim 9, wherein in response to the object display page being an object display list, a display location of the detailed information of the object to be displayed corresponding to the triggered identification image information is a first display location in the object display list; and/or a display mode of at least part of information in the detailed information of the object to be displayed corresponding to the triggered identification image information is highlighted.

11. The method of any of claims 1 to 5, wherein the information stream page comprises a summary entry area, and the method further comprises:
in response to the trigger operation on the summary entry area, jumping to a livestreaming room display page corresponding to the information stream page, wherein the livestreaming room display page comprises an object display page corresponding to the livestreaming room, and the object display page comprising detailed information of an object to be displayed corresponding to the livestreaming room.

12. The method of any of claims 1 to 5, wherein the information stream page comprises an information display area, the identification image information is located within the information display area, and in response to a number of pieces of the identification image information that can be accommodated in the information display area being less than a number of identification image information to be displayed, the method further comprises:
in response to the trigger operation on the information display area, switching the identification image information displayed in the information display area.

13. An apparatus for displaying information, comprising:
a first display module configured to display an information stream page which comprises at least one piece of identification image information, wherein the identification image information is determined based on attribute information of an object to be displayed corresponding to the information stream page; and
a second display module configured to display, in response to a trigger operation on the identification image information, a livestreaming room display page corresponding to the information stream page and detailed information of the object to be displayed corresponding to the triggered identification image information.

14. An electronic device, comprising:
one or more processors;
a storage device storing one or more programs;
the one or more programs, when executed by the one or more processors, cause the one or more processors to implement the method of any of claims 1 to 12.

15. A computer-readable storage medium having a computer program stored thereon, wherein the computer program, when executed by a processor, implements the method of any of claims 1 to 12.

16. A computer program product, comprising a computer program or an instruction which, when executed by a processor, implements the method for displaying information of any of claims 1 to 12.

17. A computer program, comprising instructions which, when executed by a processor, cause the processor to implement the method for displaying information of any of claims 1 to 12.
